# EUROPÄISCHE PATENTSCHRIFT

(11) **EP 3 222 410 B1**
(45) Veröffentlichungstag und Bekanntmachung des Hinweises auf die Patenterteilung: **12.02.2020**
(21) Anmeldenummer: 17161624.6
(22) Anmeldetag: 17.03.2017
(51) Int. Cl.: B29C 64/153, B29C 64/295, B22F 3/105

(54) **VERFAHREN UND VORRICHTUNG ZUM AUFSCHMELZEN/SINTERN VON PULVERPARTIKELN ZUR SCHICHTWEISEN HERSTELLUNG VON DREIDIMENSIONALEN OBJEKTEN**
METHOD AND DEVICE FOR MELTING/SINTERING OF POWDER PARTICLES FOR THE LAYERED PRODUCTION OF THREE-DIMENSIONAL OBJECTS
PROCÉDÉ ET MACHINE DE FUSION/FRITTAGE DE PARTICULES DE POUDRE POUR LA FABRICATION EN COUCHE D'OBJETS TRIDIMENSIONNELS

(30) Priorität: 24.03.2016 DE 102016205053
(43) Veröffentlichungstag der Anmeldung: 27.09.2017
(73) Patentinhaber: Evonik Operations GmbH, 45128 Essen (DE)
(72) Erfinder: GREBE, Maik, 44805 Bochum (DE); DIEKMANN, Wolfgang, 45731 Waltrop (DE); HESSEL-GELDMANN, Sigrid, 45721 Haltern am See (DE); KREUTZ, Jürgen, 45772 Marl (DE)
(74) Vertreter: Evonik Patent Association

(56) Entgegenhaltungen:
- EP-A1- 2 177 557
- EP-A1- 2 586 597
- WO-A1-2005/105412
- DE-A1-102013 109 162
- US-A1- 2014 035 205

## Beschreibung

Die vorliegende Erfindung betrifft ein Verfahren und eine Vorrichtung zum Aufschmelzen/Sintern von Pulverpartikeln zur schichtweisen Herstellung von dreidimensionalen Objekten.

Die zügige Bereitstellung von Prototypen oder Kleinserien ist eine in der jüngsten Zeit häufig gestellte Aufgabe. Verfahren die dies ermöglichen werden Rapid Prototyping/ Rapid Manufacturing oder auch Additive Fabrication- Verfahren oder einfach auch 3d-printing genannt. Besonders geeignet sind Verfahren bei denen schichtweise durch selektives Aufschmelzen und/oder Verfestigen von pulverförmigen Werkstoffen die gewünschten Strukturen hergestellt werden. Die nach diesem Prinzip arbeitenden Verfahren werden unter dem Oberbegriff powder bed fusion zusammengefasst.

Ein Beispiel für ein powder bed fusion Verfahren ist das selektive Laser-Sintern (SLS). Bei diesem Verfahren werden Pulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns zur Darstellung von Formkörpern aus pulverförmigen Polymeren wird ausführlich in der Patentschriften US 6136948 und WO 9606881 (beide DTM Corporation) beschrieben. In der Patentschrift WO9208566 ist eine ringförmige Strahlungsheizung beschrieben mit der das Baufeld beheizt wird. In der Patentschrift DE102005024790 A1 ist eine Strahlungsheizung beschrieben mit der das Baufeld schnell mit einem Flächenstrahlelement insbesondere aus Graphit beheizt wird.

Weitere Beispiele für powder bed fusion Verfahren sind in den Patentschriften US6531086 EP2177557 A1, DE 102013109162 A1 und EP1740367 beschrieben.

Die Temperatur des pulverförmigen Polymers im Pulverbett ist für die Prozesssicherheit und die Qualität der mittels des Verfahrens hergestellten dreidimensionale Körper von entscheidender Bedeutung. Eine möglichst hohe Temperatur der Partikel an der Oberfläche des Pulverbetts hat den Vorteil, dass nicht mehr so viel Energie selektiv z. B. durch einen Laserstrahl eingetragen werden muss. Ein zusätzlicher Energieeintrag (Nachversinterung) nach der Belichtung durch z.B. den Laser ist dann nicht mehr notwendig.

Zudem hat eine hohe Temperatur der Pulverpartikel an der Oberfläche des Pulverbetts den Vorteil, dass der Verzug der gerade aufgeschmolzenen Schmelzeschicht vermindert wird. Ein starker Verzug der Schmelzeschicht insb. das Aufbiegen/Aufrollen der Ränder wird üblicherweise als Curling bezeichnet. Um das Curling, insb. bei der Verarbeitung von Polymermaterial, zu vermeiden, wird die Temperatur an der Oberfläche des Pulverbetts daher so geregelt, dass der Verzug bzw. das Curling möglichst gering ist, aber das Pulver nicht schon durch die Temperierung versintert oder geschmolzen wird. Für viele Polymerpulver liegt diese Prozesstemperatur meist nur 10-20°C unter dem Schmelzpunkt des Polymerpulvers. Eine neu aufgetragene Pulverschicht soll auch möglichst schnell temperiert werden, um die Geschwindigkeit des Bauprozesses zu erhöhen. Die Temperierung der Oberfläche des Pulverbetts erfolgt daher nach dem Stand der Technik mittels Wärmeabstrahlelementen deren Strahlung ein Intensitätsmaximum bei einer Wellenlange von ca. 1400 nm haben.

Neben den oben genannten Vorteilen einer hohen Prozesstemperatur gibt es auch entscheidende Nachteile. Die Alterung des Polymers nimmt mit steigender Temperatur dramatisch zu. Es ist üblich, dass die Fertigung mittels eines powder bed fusion Verfahrens viele Stunden benötigt. Es ergibt sich somit eine hohe thermische Belastung für den polymeren Werkstoff. Die Strahlheizungen nach dem Stand der Technik bedingen, dass auch tiefere Schichten im Pulverbett mittels der elektromagnetischen Strahlen erwärmt und so einer unerwünschten thermischen Belastung ausgesetzt werden.

Aufgabe der vorliegenden Erfindung ist die Bereitstellung eines verbesserten Verfahrens zur Herstellung dreidimensionaler Objekte, wobei die Oberfläche des Pulverbetts mittels der Strahlheizung temperiert und ein Energieeintrag mittels Strahlung in tiefere Schichten vermieden wird. Zudem soll eine ausreichend schnelle und gleichmäßige Temperierung der Pulverbettoberfläche gewährleistet werden.

Überraschend wurde gefunden, dass mittels Wärmeabstrahlelementen, die eine Strahlung abgeben, die eine maximale Strahlungsintensität bei einer Wellenlänge von 5000 nm oder längeren Wellenlängen haben, eine schnelle Erwärmung der obersten Pulverschicht möglich ist ohne die darunterliegenden Pulverschichten mittels elektromagnetischer Strahlung übermäßig zu erwärmen. Die oberste Pulverschicht wird hier als die obersten 0,5 mm der Pulverschüttung des Pulverbetts definiert, unabhängig davon wie groß die Schichtstärke war, mit der das Pulver schichtweise aufgetragen wurde. Die Wellenlänge der maximalen Strahlungsintensität der Wärmeabstrahlelemente wird ermittelt, indem die Temperatur der Wärmeabstrahlelemente gemessen (testo 735-1 Messgerät mit PT100 Messfühlern) und dann mit dem Wienschen Verschiebungsgesetz (mit 2897800 nm·K als Wiensche Konstante) die Wellenlänge in nm mit der maximalen Strahlungsintensität berechnet wird. Gegenstand der Erfindung ist ein Verfahren zur schichtweisen Herstellung von dreidimensionalen Objekten gemäß Anspruch 1 , sowie eine Vorrichtung gemäß Anspruch 4.

Offenbart wird ein Verfahren zur schichtweisen Herstellung von dreidimensionalen Objekten, wobei in einem ersten Schritt eine höheneinstellbare Bauplattform (6) in einem Baurahmen (10) abgesenkt wird und mit einer Vorrichtung (9) eine Schicht eines durch Einwirkung elektromagnetischer Strahlung verfestigbaren Materials auf die Bauplattform (6) aufgetragen wird, wobei das Pulvermaterial mittels einer Pulverdosiereinrichtung (7) zugeführt wird. Überschüssiges Pulvermaterial wird in einen Überlaufbehälter geschoben (8). In einem zweiten Schritt wird das Pulvermaterial durch ein Heizungssystem bestehend aus Strahlheizung (2), Temperaturmesseinrichtung (11) und Temperaturregler (12) erwärmt. Die Erwärmung des Pulvermaterials erfolgt mittels einer Strahlung, die bei einer Wellenlänge von 5000 nm oder längeren Wellenlängen eine maximale Strahlungsintensität hat. Bevorzugt erfolgt die Erwärmung des Pulvermaterials mittels einer Strahlung, die bei einer Wellenlänge von 5250 nm oder längeren Wellenlängen, besonders bevorzugt 6000 nm oder längeren Wellenlängen, eine maximale Strahlungsintensität hat. Ganz besonders bevorzugt erfolgt die Erwärmung des Pulvermaterials mittels einer Strahlung, die bei einer Wellenlänge von 7000 nm oder längeren Wellenlängen eine maximale Strahlungsintensität hat. In einem dritten Schritt wird mittels einer elektromagnetische Strahlung emittierende Strahlungsquelle (1) an den gewünschten Stellen an der Oberfläche des Pulverbetts (3) selektiv geschmolzen bzw. gesintert. Diese Schritte werden wiederholt bis schichtweise ein dreidimensionales Objekt (4) entsteht. Nach Abschluss des Bauprozesses und einem ggfs. notwendigen Abkühlen des Pulverkuchens (5) kann das dreidimensionale Objekt (4) aus dem Pulverkuchen entnommen werden.

Die Wellenlänge der maximalen Strahlungsintensität sollte dabei weniger als 20% schwanken. Bevorzugt schwankt die Wellenlänge der maximalen Strahlungsintensität um maximal 10%. Besonders bevorzugt schwankt die Wellenlänge der maximalen Strahlungsintensität um maximal 5%.

Wärmeabstrahlelemente mit einer maximalen Strahlungsintensität bei einer Wellenlänge von über 5000 nm gelten als träge, so dass eine schnelle Temperatursteuerung/-regelung schwer möglich erscheint. Überraschend wurde gefunden, dass durch die gleichzeitige Bestrahlung der Oberfläche des Pulverbetts mit großflächigen Wärmeabstrahlelementen aus unterschiedlichen Richtungen eine schnelle Temperierung der Oberfläche des Pulverbetts auch mit elektromagnetischer Strahlung mit einer maximalen Intensität bei einer Wellenlänge von 5000 nm oder höheren Wellenlängen möglich ist. Die Bestrahlungsstärke beträgt dabei bevorzugt mindestens 2000W/m² bezogen auf die senkrecht projizierte Oberfläche des Pulverbetts, welche zu erwärmen ist. Die senkrecht projizierte Oberfläche des Pulverbetts entspricht auch der Fläche des Baufeldes, welche durch den Baurahmen begrenzt ist. Die Bestrahlungsstärke beträgt dabei besonders bevorzugt mindestens 3000W/m² bezogen auf die senkrecht projizierte Oberfläche des Pulverbetts, welche zu erwärmen ist. Die Fläche der Wärmeabstrahlelemente, welche die elektromagnetischen Strahlen an die Oberfläche des Pulverbetts abgibt, beträgt dabei mindestens 150% der senkrecht projizierten Oberfläche des Pulverbetts, welches erwärmt werden soll. Bevorzugt beträgt die Fläche der Wärmeabstrahlelemente, welche die elektromagnetischen Strahlen an die Oberfläche des Pulverbetts abgibt, mindestens 200% der senkrecht projizierten Oberfläche des Pulverbetts, welches erwärmt werden soll.

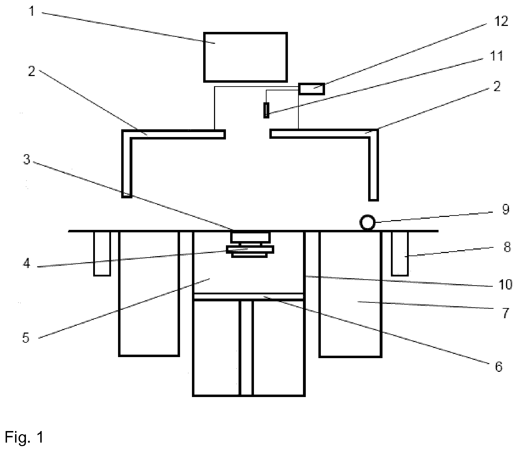

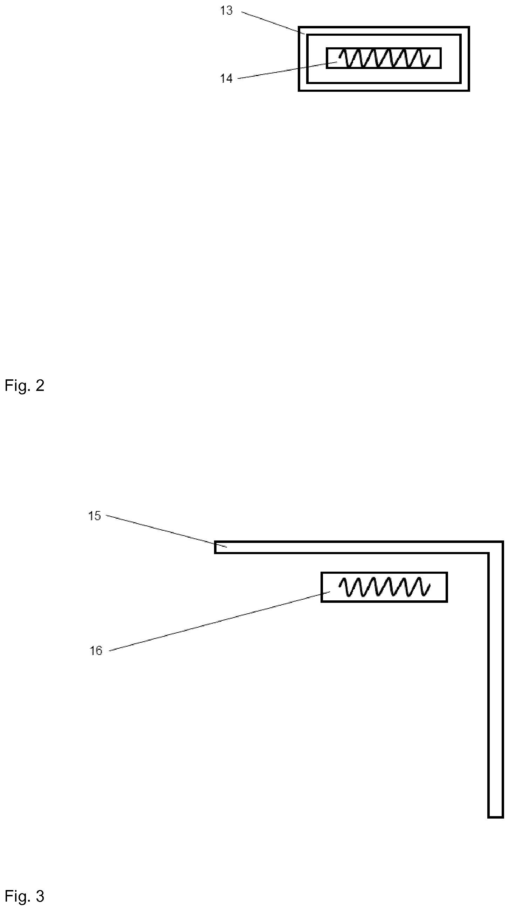

Fig. 1 zeigt den prinzipiellen Aufbau einer Vorrichtung zur Herstellung von dreidimensionalen Objekten. Ein weiterer Gegenstand der vorliegenden Erfindung ist eine Vorrichtung zur schichtweisen Herstellung von dreidimensionalen Objekten gemäß Anspruch 4. Die Vorrichtung umfasst einen Baurahmen (10) mit einer höheneinstellbaren Bauplattform (6), einer Vorrichtung (9) zum Aufbringen einer Schicht eines durch Einwirkung elektromagnetischer Strahlung verfestigbaren Materials auf die Bauplattform (6), einer Strahlheizung (2) und eine elektromagnetische Strahlungsquelle (1) mit der das verfestigbare Material selektiv aufgeschmolzen bzw. gesintert wird. Die Strahlheizung besteht aus einer Wärmequelle und aus Wärmeabstrahlelementen. Eine Temperaturregelung besteht aus einer Temperaturmesseinrichtung (11) und einer Regelungseinheit (12). Die Temperaturmesseinrichtung ist vorteilhafterweise als berührungsloses Strahlungsthermometer ausgeführt.

Die Fläche der Wärmeabstrahlelemente (2), welche die elektromagnetischen Strahlen an die Oberfläche des Pulverbetts abgeben, beträgt dabei insgesamt mindestens 150% der senkrecht projizierten Oberfläche des Pulverbetts, welche durch den Baurahmen (10) begrenzt ist. Besonders bevorzugt beträgt dabei die Fläche der Wärmeabstrahlelemente, welche die elektromagnetischen Strahlen an die Oberfläche des Pulverbetts abgeben, mindestens 200% der senkrecht projizierten Oberfläche des Pulverbetts, welche durch den Baurahmen (10) begrenzt ist. Der Gesamtemissionsgrad in Richtung der Flächennormale der Wärmeabstrahlelemente beträgt dabei mindestens 0,2. Der Gesamtemissionsgrad in Richtung der Flächennormale der Wärmeabstrahlelemente beträgt dabei bevorzugt mindestens 0,5. Die Wärmeabstrahlungselemente sind derart gestaltet, dass das Intensitätsmaximum der Strahlung der Wärmeabstrahlelemente bei einer Wellenlänge von mindestens 5000 nm liegt. Die Wärmeabstrahlungselemente sind bevorzugt derart gestaltet, dass das Intensitätsmaximum der Strahlung der Wärmeabstrahlelemente bei einer Wellenlänge von mindestens 5250 nm, besonders bevorzugt von mindestens 6000 nm, liegt. Die Wärmeabstrahlungselemente sind ganz besonders bevorzugt derart gestaltet, dass das Intensitätsmaximum der Strahlung der Wärmeabstrahlelemente bei einer Wellenlänge von mindestens 7000 nm liegt.

Die Wärmeabstrahlungselemente sind derart gestaltet, dass das Intensitätsmaximum der Strahlung der Wärmeabstrahlelemente um maximal 20% schwankt. Die Wärmeabstrahlungselemente sind bevorzugt derart gestaltet, dass das Intensitätsmaximum der Strahlung der Wärmeabstrahlelemente um maximal 10% schwankt. Die Wärmeabstrahlungselemente sind derart gestaltet, dass das Intensitätsmaximum der Strahlung der Wärmeabstrahlelemente besonders bevorzugt um maximal 20% schwankt. Die Temperierung der Wärmeabstrahlelemente kann z.B. durch Induktion, Konvektion, Wärmeleitung oder elektromagnetische Strahlung durch eine Wärmequelle erfolgen. Die Spezifische Ausstrahlung der Wärmeabstrahlelemente beträgt dabei mindestens 500W/m². Die Spezifische Ausstrahlung der Wärmeabstrahlelemente beträgt dabei bevorzugt mindestens 1000W/m². Bei der Strahlheizung können Wärmequelle (14) und Wärmeabstrahlelemente (13) in einem Bauteil integriert sein bzw. die Wärmequelle komplett von den Wärmeabstrahlelementen umschlossen sein oder Wärmeabstrahlelement (15) und Wärmequelle (16) können als getrennte Bauteile vorliegen. In einer bevorzugten Ausführungsform können die Wärmeabstrahlelemente unabhängig voneinander temperiert werden, um die Temperaturverteilung an der Oberfläche des Pulverbetts gleichmäßig einzustellen.

Grundsätzlich eignen sich alle dem Fachmann bekannten Pulver für den Einsatz in der erfindungsgemäßen Vorrichtung bzw. des erfindungsgemäßen Verfahrens. Besonders geeignet sind Pulver aus Polyamiden, Copolyamiden, Polyester, Copolyester, Polyetheramide und Polyetherketone. Besonders geeignet sind Polymerpulver, die einen Absorptionsgrad von über 0,8 bei einer Wellenlänge von 5000 nm haben. Ganz besonders geeignet sind Polymerpulver, die einen Absorptionsgrad von über 0,9 bei einer Wellenlänge von 5000 nm haben.

### Beispiele

### Beispiel 1 (nicht erfindungsgemäß)

Ein Pulver aus Polyamid 12 mit den in Tabelle 1 aufgeführten Kennwerten wird in einem Baufeld mit den Abmaßen 35x35cm und einer Fläche von 1225cm² bei Raumtemperatur (23°C) aufgetragen, so dass ein Pulverbett mit einer Höhe von 100mm entsteht. Eine Strahlungsheizung deren Wärmeabstrahlelemente eine Strahlung aussendet, die ein Intensitätsmaximum bei einer Wellenlänge von 1400 nm hat, erwärmt das Pulverbett. Die Wellenlänge der maximalen Strahlungsintensität schwankt dabei um über 30%. Die Fläche der Wärmeabstrahlelemente beträgt dabei 224 cm². Es wird die Temperatur an der Oberfläche des Pulverbetts und in einer Tiefe von 20mm im Pulverbett gemessen und protokolliert. Dier Ergebnisse sind in Tabelle 4 aufgeführt.

### Beispiel 2 (nicht erfindungsgemäß)

Ein Polymerpulver mit den in Tabelle 1 aufgeführten Kennwerten wird in einem Baufeld mit den Abmaßen 35x35cm und einer Fläche von 1225cm² aufgetragen, so dass ein Pulverbett mit einer Höhe von 100mm entsteht. Eine Strahlungsheizung mit Wärmeabstrahlelementen bestehend aus Graphitfolien, die eine Strahlung aussendet, die ein Intensitätsmaximum bei einer Wellenlänge von 2000 nm hat, erwärmt das Pulverbett. Die Fläche der Wärmeabstrahlelemente beträgt dabei 775cm². Es wird die Temperatur an der Oberfläche des Pulverbetts und in einer Tiefe von 20mm im Pulverbett gemessen und protokolliert. Die Ergebnisse sind in Tabelle 5 aufgeführt.

### Beispiel 3 (erfindungsgemäß)

Ein Polymerpulver mit den in Tabelle 1 aufgeführten Kennwerten wird in einem Baufeld mit den Abmaßen 35x35cm und einer Fläche von 1225cm² aufgetragen, so dass ein Pulverbett mit einer Höhe von 100mm entsteht. Das Pulverbett wir mittels einer Strahlungsheizung erwärmt. Die Wärmeabstrahlelemente der Strahlungsheizung senden eine Strahlung aus, die ein Intensitätsmaximum bei einer Wellenlange von 6200 nm hat. Die Wellenlänge der maximalen Strahlungsintensität schwankt dabei um unter 10%. Die Fläche der Wärmeabstrahlelemente beträgt dabei 1852 cm². Es wird die Temperatur an der Oberfläche des Pulverbetts und in einer Tiefe von 20mm im Pulverbett gemessen und protokolliert. Dier Ergebnisse sind in Tabelle 6 aufgeführt. Die Temperatur an der Oberfläche steigt hier deutlich schneller im Vergleich zu den nicht erfindungsgemäßen Beispielen. Die Temperatur in 20mm Tiefe steigt dagegen nur sehr langsam. Es ist also möglich die Temperatur an der Oberfläche des Pulverbetts zu erhöhen ohne übermäßig das Pulver in tieferen Pulverschichten zu erwärmen und somit thermisch unnötig zu belasten.

### Beispiel 4 (erfindungsgemäß)

Ein Polymerpulver mit den in Tabelle 2 aufgeführten Kennwerten wird in einem Baufeld mit den Abmaßen 35x35cm und einer Fläche von 1225cm² aufgetragen, so dass ein Pulverbett mit einer Höhe von 100mm entsteht. Das Pulverbett wir mittels einer Strahlungsheizung erwärmt. Die Wärmeabstrahlelemente der Strahlungsheizung senden eine Strahlung aus, die ein Intensitätsmaximum bei einer Wellenlange von 5700 nm hat. Die Wellenlänge der maximalen Strahlungsintensität schwankt dabei um unter 10%. Die Fläche der Wärmeabstrahlelemente beträgt dabei 2466 cm². Es wird die Temperatur an der Oberfläche des Pulverbetts und in einer Tiefe von 20mm im Pulverbett gemessen und protokolliert. Dier Ergebnisse sind in Tabelle 7 aufgeführt. Die Temperatur an der Oberfläche steigt hier deutlich schneller im Vergleich zu den nicht erfindungsgemäßen Beispielen. Die Temperatur in 20mm Tiefe steigt dagegen nur sehr langsam. Es ist also möglich die Temperatur an der Oberfläche des Pulverbetts zu erhöhen ohne übermäßig das Pulver in tieferen Pulverschichten zu erwärmen und somit thermisch unnötig zu belasten.

### Beispiel 5 (erfindungsgemäß)

Ein Polymerpulver mit den in Tabelle 3 aufgeführten Kennwerten wird in einem Baufeld mit den Abmaßen 35x35cm und einer Fläche von 1225cm² aufgetragen, so dass ein Pulverbett mit einer Höhe von 100mm entsteht. Das Pulverbett wir mittels einer Strahlungsheizung erwärmt. Die Wärmeabstrahlelemente der Strahlungsheizung senden eine Strahlung aus, die ein Intensitätsmaximum bei einer Wellenlange von 5000 nm hat. Die Wellenlängen der maximalen Strahlungsintensität schwankt dabei um unter 10%. Die Fläche der Wärmeabstrahlelemente beträgt dabei 2466 cm². Es wird die Temperatur an der Oberfläche des Pulverbetts und in einer Tiefe von 20mm im Pulverbett gemessen und protokolliert. Dier Ergebnisse sind in Tabelle 8 aufgeführt. Die Temperatur an der Oberfläche steigt hier deutlich schneller im Vergleich zu den nicht erfindungsgemäßen Beispielen. Die Temperatur in 20mm Tiefe steigt dagegen nur sehr langsam. Es ist also möglich die Temperatur an der Oberfläche des Pulverbetts zu erhöhen ohne übermäßig das Pulver in tieferen Pulverschichten zu erwärmen und somit thermisch unnötig zu belasten.

### Beispiel 6 (erfindungsgemäß)

Ein Polymerpulver mit den in Tabelle 1 aufgeführten Kennwerten wird in einem Baufeld mit den Abmaßen 35x35cm und einer Fläche von 1225cm² aufgetragen, so dass ein Pulverbett mit einer Höhe von 100mm entsteht. Das Pulverbett wir mittels einer Strahlungsheizung erwärmt. Die Wärmeabstrahlelemente der Strahlungsheizung senden eine Strahlung aus, die ein Intensitätsmaximum bei einer Wellenlange von 7050 nm hat. Die Fläche der Wärmeabstrahlelemente beträgt dabei 1852 cm². Die Wellenlänge der maximalen Strahlungsintensität schwankt dabei um unter 5%. Es wird die Temperatur an der Oberfläche des Pulverbetts und in einer Tiefe von 20mm im Pulverbett gemessen und protokolliert. Dier Ergebnisse sind in Tabelle 9 aufgeführt. Die Temperatur an der Oberfläche steigt hier deutlich schneller im Vergleich zu den nicht erfindungsgemäßen Beispielen. Die Temperatur in 20mm Tiefe steigt dagegen nur sehr langsam. Es ist also möglich die Temperatur an der Oberfläche des Pulverbetts zu erhöhen ohne übermäßig das Pulver in tieferen Pulverschichten zu erwärmen und somit thermisch unnötig zu belasten.

**Tabelle 1: Pulverkennwerte Polyamid 12**

| | **Wert** | **Einheit** | **Prüfart/Prüfgerät/Prüfparameter** |
|---|---|---|---|
| Polymer | Polyamid 12 | | |
| Schüttdichte | 0,456 | g/cm³ | DIN EN ISO 60 |
| Korngröße d50 | 58 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 32 | µm | Malvern Mastersizer 2000, Parameter siehe Korngröße d50 |
| Korngröße d90 | 86 | µm | Malvern Mastersizer 2000, Parameter siehe Korngröße d50 |
| <10,48µm | 1 | % | Malvern Mastersizer 2000, Parameter siehe Korngröße d50 |
| BET (spez. Oberfläche) | 7,1 | m²/g | ISO 9277, Micromeritics TriStar 3000, Gasadsorption von Stickstoff, diskontinuierlichen volumetrischen Verfahren, 7 Messpunkte bei Relativdrücken P/PO zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 139 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 2: Pulverkennwerte Polyamid 106**

| | **Wert** | **Einheit** | **Prüfart/Prüfgerät/Prüfparameter** |
|---|---|---|---|
| Polymer | Polyamid 106 | | |
| Schüttdichte | 0,438 | g/cm³ | DIN EN ISO 60 |
| Korngröße d50 | 66 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 48 | µm | Malvern Mastersizer 2000, Parameter siehe Korngröße d50 |
| Korngröße d90 | 91 | µm | Malvern Mastersizer 2000, Parameter siehe Korngröße d50 |
| <10,48µm | 1 | % | Malvern Mastersizer 2000, Parameter siehe Korngröße d50 |
| BET (spez. Oberfläche) | 5,3 | m²/g | ISO 9277, Micromeritics TriStar 3000, Gasadsorption von Stickstoff, diskontinuierlichen volumetrischen Verfahren, 7 Messpunkte bei Relativdrücken P/PO zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 242 | °C | DIN 53765 DSC 7 v. Perkin Elmer Heiz-/Kühlrate 20K/min |
| Rekristallisationstemperatur | 196 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 3: Pulverkennwerte PEEK**

| | **Wert** | **Einheit** | **Prüfart/Prüfgerät/Prüfparameter** |
|---|---|---|---|
| Polymer | PEEK | | |
| Schüttdichte | 0,438 | g/cm³ | DIN EN ISO 60 |
| Korngröße d50 | 66 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| Korngröße d10 | 48 | µm | Malvern Mastersizer 2000, Parameter siehe Korngröße d50 |
| Korngröße d90 | 91 | µm | Malvern Mastersizer 2000, Parameter siehe Korngröße d50 |
| <10,48µm | 1 | % | Malvern Mastersizer 2000, Parameter siehe Korngröße d50 |
| BET (spez. Oberfläche) | 5,3 | m²/g | ISO 9277, Micromeritics TriStar 3000, Gasadsorption von Stickstoff, diskontinuierlichen volumetrischen Verfahren, 7 Messpunkte bei Relativdrücken P/PO zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 242 | °C | DIN 53765 DSC 7 v. Perkin Elmer Heiz-/Kühlrate 20K/min |
| Rekristallisationstemperatur | 196 | °C | DIN 53765 DSC 7 v. Perkin Elmer Heiz-/Kühlrate 20K/min |
| Materialkonditionierung | Material wird vor Verarbeitung/Analyse 24h bei 23°C und 50% Luftfeuchtigkeit gelagert | | |

**Tabelle 4: Temperaturmessung Beispiel 1**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 32 | 24 |
| 1 | 39 | 25 |
| 1,5 | 44 | 26 |
| 2 | 51 | 27 |
| 2,5 | 55 | 28 |

**Tabelle 5: Temperaturmessung Beispiel 2**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 34 | 24 |
| 1 | 41 | 24 |
| 1,5 | 47 | 25 |
| 2 | 54 | 26 |
| 2,5 | 60 | 27 |

**Tabelle 6: Temperaturmessung Beispiel 3**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 41 | 23 |
| 1 | 57 | 23 |
| 1,5 | 68 | 23 |
| 2 | 79 | 24 |
| 2,5 | 90 | 24 |

**Tabelle 7: Temperaturmessung Beispiel 4**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 40 | 23 |
| 1 | 55 | 23 |
| 1,5 | 66 | 24 |
| 2 | 75 | 24 |
| 2,5 | 86 | 24 |

**Tabelle 8: Temperaturmessung Beispiel 5**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 39 | 23 |
| 1 | 53 | 24 |
| 1,5 | 64 | 24 |
| 2 | 73 | 24 |
| 2,5 | 83 | 25 |

**Tabelle 9: Temperaturmessung Beispiel 6**

| Zeitpunkt der Messung in min | Temperatur Messpunkt oberste Pulverschicht in °C | Temperatur Messpunkt 20mm unter Pulveroberfläche in °C |
|---|---|---|
| 0 | 23 | 23 |
| 0,5 | 44 | 23 |
| 1 | 59 | 23 |
| 1,5 | 71 | 23 |
| 2 | 82 | 23 |
| 2,5 | 94 | 24 |

## Patentansprüche

1. Verfahren zur schichtweisen Herstellung von dreidimensionalen Objekten, wobei die folgenden Schritte umfasst sind:
a) Auftrag einer Schicht eines durch Einwirkung elektromagnetischer Strahlung verfestigbaren Pulvermaterials,
b) Erwärmen des Pulvermaterials bis maximal 10 K unterhalb des Schmelzpunkts nach DIN 53765 mittels einer Strahlung eines Wärmeabstrahlelements, deren maximale Strahlungsintensität bei einer Wellenlänge von 5000 nm oder bei längeren Wellenlängen liegt,
c) selektives Schmelzen bzw. Sintern zumindest eines Bereichs des Pulvermaterials, die dem Querschnitt des dreidimensionalen Objekts entsprechen,
d) Wiederholen der Schritte a) bis c) bis zum Erhalt des dreidimensionalen Objekts.

2. Verfahren gemäß Anspruch 1, **dadurch gekennzeichnet, dass** die Bestrahlungsstärke des Wärmeabstrahlelements mindestens 2000 W/m², bezogen auf die senkrecht projizierte Oberfläche des Pulverbetts, welche zu erwärmen ist, beträgt.

3. Verfahren gemäß einem der vorherigen Ansprüche, **dadurch gekennzeichnet, dass** die Fläche des Wärmeabstrahlelements mindestens 100% der senkrecht projizierten Oberfläche des Pulverbetts, welches erwärmt werden soll, beträgt.

4. Vorrichtung zur schichtweisen Herstellung von dreidimensionalen Objekten, umfassend einen Baurahmen (10) mit einer höhenverstellbaren Bauplattform (6), einer Vorrichtung (9) zum Aufbringen einer Schicht eines durch Einwirkung elektromagnetischer Strahlung verfestigbaren Materials auf die Bauplattform (6), einer Strahlheizung (2) und eine elektromagnetische Strahlungsquelle (1), **dadurch gekennzeichnet, dass** Wärmeabstrahlelemente (2) umfasst sind, deren Fläche, welche die elektromagnetischen Strahlen an die Oberfläche des Pulverbetts abgeben, mindestens 150% der senkrecht projizierten Oberfläche des Pulverbetts, welches durch den Baurahmen (10) begrenzt ist, beträgt, wobei die senkrecht projizierte Oberfläche des Pulverbetts der Fläche des Baufeldes entspricht, und das Intensitätsmaximum der Strahlung der Wärmeabstrahlelemente bei einer Wellenlänge von mindestens 5000 nm liegt.

5. Vorrichtung gemäß Anspruch 4, **dadurch gekennzeichnet, dass** die Fläche der Wärmeabstrahlungselemente (2) mindestens 200% der senkrecht projizierten Oberfläche des Pulverbetts beträgt.

6. Vorrichtung gemäß Anspruch 4 oder 5, **dadurch gekennzeichnet, dass** die Wärmeabstrahlungselemente (2) derart gestaltet sind, dass der Gesamtemissionsgrad in Richtung der Flächennormale der Wärmeabstrahlelemente mindestens 0,2 beträgt.

## Claims

1. Process for layer-by-layer production of three-dimensional objects, wherein said process comprises the steps of:
a) applying a layer of a powder material solidifiable under the action of electromagnetic radiation,
b) heating the powder material to not more than 10 K below the melting point according to DIN 53765 by means of a radiation from a heat-radiating element whose maximum radiation intensity is at a wavelength of 5000 nm or at longer wavelengths,
c) selective melting/sintering of at least a region of the powder material which corresponds to the cross section of the three-dimensional object,
d) repeating steps a) to c) until the three-dimensional object is obtained.

2. Process according to Claim 1, **characterized in that** the irradiation power of the heat-radiating element is at least 2000 W/m² based on the vertically projected area of the powder bed that is to be heated.

3. Process according to either of the preceding claims, **characterized in that** the area of the heat-radiating element is at least 100% of the vertically projected area of the powder bed that is to be heated.

4. Apparatus for layer-by-layer production of three-dimensional objects, comprising a build frame (10) having a height-adjustable build platform (6), an apparatus (9) for applying a layer of a material solidifiable under the action of electromagnetic radiation to the build platform (6), a radiant heating means (2) and an electromagnetic radiation source (1), **characterized in that** heat-radiating elements (2) are present, whose area, which give off the electromagnetic rays to the surface of the powder bed, is at least 150% of the vertically projected area of the powder bed which is bounded by the build frame (10), wherein the vertically projected area of the powder bed corresponds to the area of the build region, and the intensity maximum of the radiation from the heat-radiating elements is at a wavelength of at least 5000 nm.

5. Apparatus according to Claim 4, **characterized in that** the area of the heat-radiating elements (2) is at least 200% of the vertically projected area of the powder bed.

6. Apparatus according to either of Claims 4 and 5, **characterized in that** the heat-radiating elements (2) are configured such that the total emissivity in the direction of the surface normal of the heat-radiating elements is at least 0.2.

## Revendications

1. Procédé pour fabriquer par couches successives des objets tridimensionnels, le procédé comprenant les étapes suivantes :
a) application d'une couche d'un matériau poudreux apte à se solidifier sous l'action d'un rayonnement électromagnétique,
b) chauffage du matériau poudreux jusqu'à au plus 10 K en dessous du point de fusion selon DIN 53765 au moyen du rayonnement d'un élément émettant de la chaleur dont l'intensité maximale du rayonnement se situe à une longueur d'onde de 5000 nm ou à des longueurs d'onde plus grandes,
c) fusion ou frittage sélectifs d'au moins une partie du matériau poudreux qui correspond à la section transversale due l'objet tridimensionnel et
d) répétition des étapes a) à c) jusqu'à l'obtention de l'objet tridimensionnel.

2. Procédé selon la revendication 1, **caractérisé en ce que** l'intensité de l'irradiation de l'élément émettant de la chaleur sur une projection orthogonale de la surface du lit de poudre est d'au moins 2000 W/m².

3. Procédé selon l'une des revendications précédentes, **caractérisé en ce que** la superficie de l'élément émettant de la chaleur représente au moins 100 % de la projection orthogonale de la surface du lit de poudre qui doit être chauffée.

4. Ensemble pour fabriquer par couches successives des objets tridimensionnels, comprenant
un bâti de construction (10) doté d'une plateforme de construction (6) ajustable en hauteur,
un ensemble (9) permettant d'appliquer sur la plateforme de construction (6) une couche d'un matériau poudreux apte à se solidifier sous l'action d'un rayonnement électromagnétique,
un chauffage radiant (2) et
une source (1) de rayonnement électromagnétique, **caractérisé en ce que**
l'ensemble comprend des éléments (2) émettant de la chaleur dont la surface qui émet le rayonnement électromagnétique sur la surface du lit de poudre représente au moins 150 % de la projection orthogonale de la surface du lit de poudre délimitée par le bâti de construction (10), la projection orthogonale de la surface du lit de poudre correspondant au champ de construction et l'intensité maximale des éléments émettant de la chaleur se situant à une longueur d'onde de 5000 nm.

5. Ensemble selon la revendication 4, **caractérisé en ce que** la superficie des éléments (2) émettant de la chaleur représente au moins 200 % de la projection orthogonale de la surface du lit de poudre.

6. Ensemble selon les revendications 4 ou 5, **caractérisé en ce que** les éléments (2) émettant de la chaleur sont configurés de telle sorte que le taux total d'émission dans la direction de la normale à la surface des éléments émettant de la chaleur est d'au moins 0,2.
